Europäisches Patentamt

European Patent Office

Office européen des brevets

(19)

(11) Veröffentlichungsnummer: **0 052 279**
**B1**

(12) **EUROPÄISCHE PATENTSCHRIFT**

(45) Veröffentlichungstag der Patentschrift:
**03.10.84**

(21) Anmeldenummer: **81109179.2**

(22) Anmeldetag: **29.10.81**

(51) Int. Cl.³: **B 32 B 27/00,** B 60 J 11/00,
F 25 D 23/00

(54) **Isolierfolie.**

(30) Priorität: **15.11.80 DE 8030565 U**

(43) Veröffentlichungstag der Anmeldung:
**26.05.82 Patentblatt 82/21**

(45) Bekanntmachung des Hinweises auf die Patenterteilung:
**03.10.84 Patentblatt 84/40**

(84) Benannte Vertragsstaaten:
**AT BE CH DE FR GB IT LI LU NL SE**

(56) Entgegenhaltungen:
**CH - A - 606 896
DE - A - 2 433 717
GB - A - 1 288 942
US - A - 3 381 420
US - A - 4 147 829**

(73) Patentinhaber: **Tesmer, Jörg, Am Sommerberg 14,
D-7343 Kuchen (DE)**

(72) Erfinder: **Tesmer, Jörg, Am Sommerberg 14,
D-7343 Kuchen (DE)**

(74) Vertreter: **Dreiss, Uwe, Dr. jur. Dipl.-Ing. M.Sc. et al,
Patentanwälte Dreiss, Hosenthien & Fuhlendorf
Gerokstrasse 6, D-7000 Stuttgart 1 (DE)**

## Beschreibung

Die Erfindung betrifft eine Isolierfolie für Nachtabdeckungen von Kühlregalen aus auch bei tiefen Temperaturen von etwa —25°C flexiblem Material mit einem als Träger dienenden Gewebe, das mindestens eine Kunststoffschicht trägt.

Aus der DE-A-2 433 717 ist eine aus mehreren Schichten aufgebaute Isolierung für Rohre, Behälter usw. bekannt, die zur Erhöhung der Festigkeit mit einem Gewebe versehen ist. Zur Erhöhung der Isolierwirkung ist eine reflektierende Aluminiumbeschichtung angeordnet, die noch durch eine Überzugsschicht gegen mechanische Beschädigung geschützt ist. Die dort beschriebenen Werkstoffe sind nur wenig flexibel, so dass diese bekannte Isolierung nicht mehrfach auf- und zugerollt werden kann.

Aus der US-A-3 381 420 ist eine mehrschichtige Schaumstoffisolierung bekannt. Für Nachtabdeckungen ist dieses Material viel zu dick. Der Platzbedarf wäre viel zu gross. Ausserdem würde durch häufiges Auf- und Zurollen der Schaumstoff bald zerstört sein.

Aus der GB-A-1 288 942 ist noch eine mehrschichtige Isolierfolie bekannt, die für Nachtabdeckungen geeignet ist. Sie weist mehrere Polyesterschichten und eine Aluminiumreflektionsschicht auf, hat aber eine relativ geringe Eigenfestigkeit, so dass bei einer zufälligen örtlichen höheren Belastung leicht Verformungen auftreten können, die dann ein späteres platzsparendes Aufrollen kaum mehr zulassen.

In Vermeidung dieser Nachteile liegt der vorliegenden Erfindung die Aufgabe zugrunde, eine Isolierfolie der eingangs genannten Art so zu verbessern, dass der Wärmedurchgang auch bei grossen Temperaturdifferenzen gering bleibt und die Folie trotzdem eine hohe Lebensdauer und Gebrauchsfestigkeit aufweist.

Zur Lösung dieser Aufgabe sieht die Erfindung vor, dass das Gewebe zwischen mindestens zwei PVC-Folien angeordnet ist und dass mindestens die Aussenseite einer der PVC-Folien durch eine mit einer Aluminiumschicht bedampften weiteren Folie abgedeckt ist, wobei die beiden PVC-Folien und das Gewebe durch Walzen unter Druck und Wärme miteinander verbunden sind.

Durch die Verwendung von PVC-Folien kann eine preiswerte Isolierfolie hergestellt werden, die durch die Anordnung eines Gewebes wiederstandsfähig gegen Verformungen ist, eine hohe Wechselfestigkeit aufweist, so dass auch bei häufigem Ein- und Ausrollen keine Materialermüdung eintritt.

Die Folie kann dadurch besonders verrottungssicher gemacht werden, wenn das Gewebe aus Polyesterfäden besteht. Weiter kann, um das optische Aussehen zu verbessern und gefällig zu gestalten, mindestens eine der beiden PVC-Folien mit einer Prägung versehen sein.

Die äussere Kunststoffschicht kann zur rationellen weitgehend automatisierbaren Fertigung mit der an das Gewebe grenzenden PVC-Folie zusammenkaschiert werden.

Besonders gut isolierende und trotzdem relativ dünne Isolierfolien können dadurch geschaffen werden, dass beidseitig eine äussere Kunststoffschicht mit einer aluminiumbedampften Innenseite angeordnet sind, wobei gleichzeitig auch eine besonders gute Lebensmittelechtheit erreichbar ist. Um einen gewissen Luftaustausch und eine bessere Frischhaltung der Ware zu erreichen, können in vorteilhafter Weise Durchbrüche, vorzugsweise in Kreisform auf der Folienfläche verteilt vorgesehen sein. Hierdurch wird gleichzeitig auch eine bessere Flexibilität und eine höhere Lebensdauer erreicht.

Weitere erfindungsgemässe Ausbildungen sind den Unteransprüchen zu entnehmen und werden mit ihren Vorteilen in der nachstehenden Beschreibung näher erläutert.

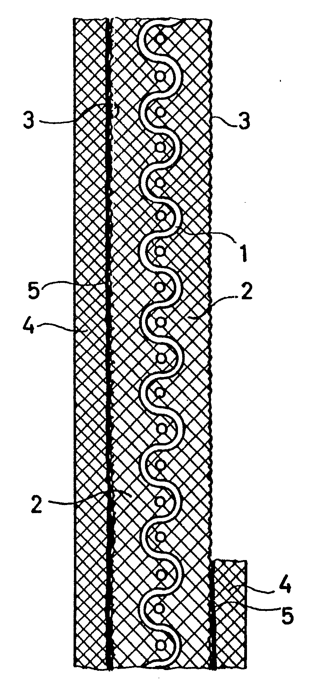

In der beigefügten einzigen Zeichnung ist ein Querschnitt durch eine Isolierfolie dargestellt. Ein Gewebe 1 aus Polyesterfäden ist zwischen zwei PVC-Folien 2 einkaschiert, wobei das Gewebe 1 durch Walzen unter Druck und Wärme fest eingebettet ist. Gleichzeitig beim Herstellen durch Walzen kann eine oder auch beide Aussenoberflächen der PVC-Folien 2 mit einer Prägung 3 versehen werden, um die Oberfläche optisch zu gestalten. Die beiden PVC-Folien 2 sowie das Gewebe 1 dienen als Trägermaterial für eine äussere Kunststoffschicht 4. Diese besteht im Ausführungsbeispiel aus einer Polyesterfolie 4, deren dem Gewebe 1 zugekehrte Innenseite mit einer Aluminiumschicht 5 bedampft ist. Die so hergestellte Polyesterfolie 4 wird auf der Aussenseite einer PVC-Folie 2 aufkaschiert (obere Figurendarstellung) oder die Aufkaschierung kann auch beidseitig erfolgen (unterer Teil der Figur), um so die Isoliereigenschaften der Isolierfolie wesentlich zu verbessern und auch zu verhindern, dass Weichmacher aus der PVC-Schicht nach aussen dringen können, wodurch mindestens eine bedingte Lebensmittelechtheit erreicht wird.

Die so ausgebildeten Isolierfolien sind besonders flexibel und auch bei minus 30°C noch nicht brüchig, sie ist zumindest bedingt lebensmittelecht. Besonders vorteilhaft ist durch die Verwendung der aluminiumbedampften Polyesterfolie die Isolierfolie nach den Vorschriften DIN schwer entflammbar und durch das Gewebe 1 ist auch eine hohe Reissfestigkeit gegeben. Durch die Anordnung von Durchbrüchen in der Folie, vorzugsweise in Kreisform, kann eine Bildung von Schwitzwasser verhindert und ein gewisser Luftaustausch zur besseren Frischhaltung der Ware erreicht werden.

## Patentansprüche

1. Isolierfolie für Nachtabdeckungen von Kühlregalen aus auch bei tiefen Temperaturen von etwa —25°C flexiblem Material mit einem als Träger dienenden Gewebe (1), das mindestens eine Kunststoffschicht trägt, dadurch gekennzeichnet, dass das Gewebe (1) zwischen mindestens zwei PVC-Folien (2) angeordnet ist und dass mindestens die Aussenseite einer der PVC-Folien (2) durch eine mit einer Aluminiumschicht (5) bedampften weiteren Folie abgedeckt ist, wobei die beiden PVC-Folien (2) und das Gewebe (1) durch Walzen unter Druck und Wärme miteinander verbunden sind.

2. Isolierfolie nach Anspruch 1, dadurch gekennzeichnet, dass das Gewebe (1) aus Polyesterfäden besteht.

3. Isolierfolie nach Anspruch 1, dadurch gekennzeichnet, dass mindestens eine der beiden PVC-Folien (2) mit einer Prägung versehen ist.

4. Isolierfolie nach Anspruch 1, dadurch gekennzeichnet, dass die äussere Kunststoffschicht (4) eine Polyesterfolie ist, deren dem Gewebe (1) zugekehrte Seite mit der Aluminiumschicht (5) bedampft ist.

5. Isolierfolie nach einem der Ansprüche 1 bis 4, dadurch gekennzeichnet, dass die äussere Kunststoffschicht (4) mit der an das Gewebe (1) grenzenden PVC-Folie (2) zusammenkaschiert ist.

6. Isolierfolie nach einem der Ansprüche 1 bis 5, dadurch gekennzeichnet, dass beidseitig eine äussere Kunststoffschicht (4) mit einer inneren Aluminiumschicht (5) vorgesehen ist.

7. Isolierfolie nach einem der Ansprüche 1 bis 6, dadurch gekennzeichnet, dass Durchbrüche vorzugsweise in Kreisform auf der Folienfläche verteilt vorgesehen sind.

## Claims

1. Insulating foil for nighttime coverage of cooling shelves consisting of a material still flexible at low temperatures of approximately —25°C, with a fabric (1) serving as a carrier, said fabric carrying at least one plastic layer, characterized in that the fabric (1) is positioned at least between two PVC-foils (2) and that at least the outer surface of one of the PVC-foils (2) is covered with a further foil, which further foil is provided with a vapor deposited aluminum layer, and that the both PVC-foils (2) and the fabric (1) are connected with each other by rollers during application of pressure and heat.

2. Insulating foil in accordance to claim 1, characterized in that the fabric (1) consists of polyester filaments.

3. Insulating foil in accordance to claim 1, characterized in that at least one of the both PVC-foils (2) is provided with a stamping.

4. Insulating foil in accordance to claim 1, characterized in that the outer plastic layer (4) is a polyester foil, and that the side of which, which faces the fabric (1), is covered by vapor deposition with the aluminum layer (5).

5. Insulating foil in accordance to one of claims 1 to 4, characterized in that the outer plastic layer (4) is lamination-connected to the PVC-foil (2), which lays adjacent to the fabric (1).

6. Insulating foil in accordance to one of claims 1 to 5, characterized in that on both sides an outer plastic layer (4) with an inner aluminum layer (5) is provided.

7. Insulating foil in accordance to one of claims 1 to 6, characterized in that openings are distributed on the foil surfaces preferably in circular form.

## Revendications

1. Feuille isolante pour revêtements nocturnes de rayonnages réfrigérants, constituée d'un matériau encore flexible à des températures basses d'environ —25°C, composé d'un tissu (1) servant de support, qui supporte au moins une feuille de matière synthétique, caractérisée par le fait que le tissu (1) est placé entre au moins deux feuilles (2) de PVC et qu'au moins la face externe d'une des feuilles (2) de PVC est recouverte d'une feuille supplémentaire par métallisation sous vide d'une couche (5) d'aluminium, les deux feuilles (2) de PVC et le tissu (1) étant liés les uns aux autres par des rouleaux compresseurs et par la chaleur.

2. Feuille isolante selon la revendication 1, caractérisée par le fait que le tissu (1) est constitué de fils de polyester.

3. Feuille isolante selon la revendication 1, caractérisée par le fait qu'au moins une des feuilles (2) de PVC est munie d'une impression.

4. Feuille isolante selon la revendication 1, caractérisée par le fait que la couche externe (4) de matière synthétique est une feuille de polyester, dont la face tournée vers le tissu (1) est recouverte par métallisation sous vide d'une couche d'aluminium (5).

5. Feuille isolante selon l'une des revendications 1 à 4, caractérisée par le fait que la couche externe (4) de matière synthétique est rapportée conjointement avec la feuille (2) de PVC contiguë sur le tissu (1).

6. Feuille isolante selon l'une des revendications 1 à 5, caractérisée par le fait que des deux côtés une couche externe (4) de matière synthétique est munie d'une couche interne (5) d'aluminium.

7. Feuille isolante selon l'une des revendications 1 à 6, caractérisée par le fait que des perforations dispersées de préférence de forme circulaire sont prévues sur les faces des feuilles.